# EUROPEAN PATENT SPECIFICATION

(11) **EP 0 914 799 B1**
(45) Date of publication and mention of the grant of the patent: **02.04.2003**
(21) Application number: 98118783.4
(22) Date of filing: 05.10.1998
(51) Int. Cl.: A47L 15/42

(54) **Method for recovering rinse-aid containing water in an automatic dishwashing machine**
Verfahren zur Rückgewinnung von Spülmittel beinhaltendem Wasser in einer automatischen Geschirrspülmaschine
Méthode de récupération d'une eau contenant un produit de rinçage dans un lave-vaisselle automatique

(30) Priority: 05.11.1997 IT PN970061
(43) Date of publication of application: 12.05.1999
(73) Proprietor: Electrolux Zanussi S.p.A., 33170 Pordenone (IT)
(72) Inventor: Milocco, Claudio, 34100 Trieste (IT)
(74) Representative: Busca, Luciano

(56) References cited:
- EP-A- 0 669 097
- EP-A- 0 716 178
- EP-A- 0 800 785
- PATENT ABSTRACTS OF JAPAN vol. 096, no. 007, 31 July 1996 & JP 08 071513 A (NAGANO KOKI:KK), 19 March 1996

## Description

The present invention refers to a method adapted to be used in an automatic dishwashing machine in view of recovering in an optimum manner water containing rinse aid, in particular the water from a final rinse, for reutilization in a washing or similar phase of a subsequent operation cycle of the machine.

Washing machines provided with arrangements for recovering water from an operating phase in view of a reutilization thereof in another operating phase of a subsequent operation cycle of the machine are already largely known in the art.

A dishwashing machine is for instance known from EP-A-0 669 097 and EP-A-0 800 785 to be provided with a reservoir adapted to temporarily store the water from a rinse phase of the machine in view of using it again as wash, or pre-wash, water during a subsequent washing cycle of the same machine, so as to bring about a substantial overall energy saving effect.

Standard operation cycles of modern domestic dishwashing machines are in fact commonly known to mainly comprise, in a sequence, a washing phase carried out with hot water, at least a rinsing phase carried out with cold water, and at least a final rinsing phase carried out with hot water to which rinse-aid is appropriately added. Said washing phase can furthermore be preceded by a pre-wash phase carded out with either warm or cold water, as the case may be. In any case, the rinse aid is added to the final rinse water in view of reducing the surface tension of the dishes and, therefore, improving their final cleanliness by minimizing detergent and/or water hardness residues that may have staining effects.

As a principle, a generally preferred option is to recover the water from the last rinse of a dishwashing machine, since this water actually contains a minimum amount of soil residues, so that its temporary storage and subsequent reutilization in the above described manner give advantageously rise to just a minimum extent of sanitary problems and/or soil incrustations in the. water carrying circuit of the machine.

In practice, however, this has up to now proven to be scarcely feasible to any satisfactory extent owing to the afore mentioned presence of the rinse aid contained in the last rinse water. As a matter of fact, when such a recovered last rinse water is reused during a subsequent operation cycle of the machine by letting it be circulated under pressure in order to be adequately sprayed onto the dishes, the same water will in the meantime have substantially cooled down and the rinse aid will therefore give rise to excessive foaming in the water circulating circuit of the machine. Such a foaming, as anyone skilled in the art is well aware of, is particularly abundant when the water has a temperature which is lower than approx. 40°C, and can impair a correct operation of the wash-water circulating pump of the machine. Conclusively, the overall performance capabilities of the machine turn out to be unsatisfactory.

As a result, the possibility is practically given for water to be only recovered which does not contain such a rinse aid, ie. preferably water from the penultimate rinse. Such a solution, however, turns out to be substantially unsatisfactory due to the afore cited reasons.

From EP-A-0 716 178 a clothes washing machine is also known having a wash tank connected in a pump-operated water recirculation circuit provided with an anti-foaming unit that is used to heat the circulated cleaning liquid, when the latter is foaming, to break the generated foam. This solution supers from the drawback that the generated foam, before being broken, impairs the operation of the circulation pump and therefore affects the overall performances of the machine.

It therefore is a main purpose of the present invention to provide a method that can be easily implemented in a simple automatic dishwashing machine to recover water from an operating phase carried out with rinse-aid containing water, such as in particular a final rinse phase, in view of reusing it in a subsequent operation cycle of the machine without giving rise to any substantial foaming problem.

According to the present invention, such an aim is reached in a method for recovering rinse-aid containing water in an automatic dishwashing machine, such a method embodying the features and characteristics as recited in the appended claims.

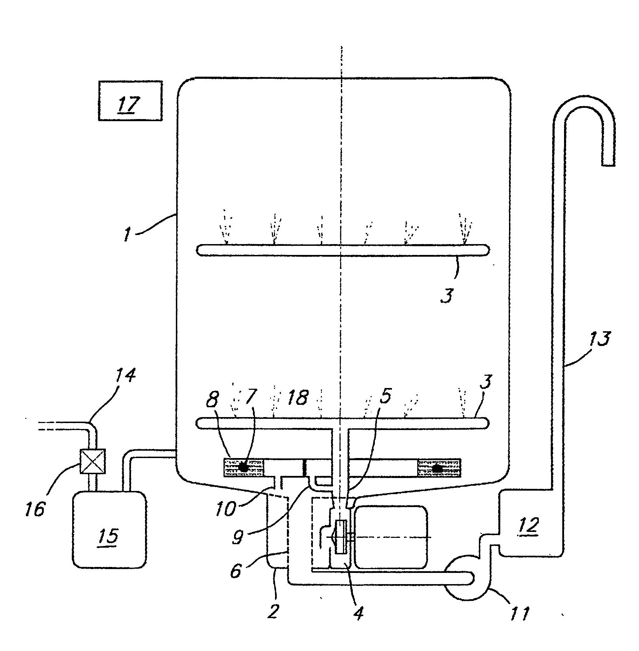

The features and advantages of the present invention will anyway be more readily understood from the description which is given below by way of non-limiting example. The description itself is given with reference to the accompanying drawing, in which the sole Figure appearing there illustrates schematically the main component parts of such a dishwashing machine adapted to carry out the method according to the present invention.

With reference to such a Figure, it can be noticed that the method according to the present invention can be implemented in a dishwashing machine which is substantially made as described for instance in EP-A-0 744 150, to which reference is therefore made for a better understanding.

The dishwashing machine mainly comprises a washing vessel 1 provided on the bottom with a sump 2 for collecting the water. Said washing vessel houses one or more rotating spray arms 3 connected to the delivery 5 of a circulating pump 4, which is preferably operable selectively at different speeds, in particular at a normal operating speed and a reduced speed. At such a normal operating speed, said pump 4 is adapted to supply said rotating spray arms 3 so as to enable them to spray onto the washload items (not shown) the wash water that then falls by gravity back onto the bottom of the vessel, where it collects in the sump 2 through a filter 6.

An electric resistance-type or similar heating element 7 is housed in a substantially closed container 8 arranged in said washing vessel 1, in a heat-exchange relation therewith, below the lower rotating spray arm 3.

In a preferred manner, the container 8 has a horizontally arranged ring-like conformation, with an inlet 9 and an outlet 10 that are substantially spaced from each other. The heating element 7 extends inside the container 8 with a corresponding structure. The container 8 is connected in the water circulating circuit of the dishwashing machine, preferably in a parallel arrangement with respect to the rotating spray arms 3, so that the inlet 9 thereof is connected to the delivery 5 of the circulating pump, whereas the outlet 10 thereof communicates with the water collecting sump 2 through the filter 6. In a per sè known manner, the machine is further provided with thermostatic sensor means, schematically indicated at 18 in the Figure, which are adapted to detect the temperature of the water in the washing vessel, in particular in the container 8.

A drain pump connects the bottom of the sump 2, preferably through at least a reservoir 12, to a drain pipe 13.

The dishwashing machine further comprises a water supply circuit 14 adapted to let water from the mains into the washing vessel 1 through a water softener arrangement 15 and a valve 16 controlled by a programme sequence control unit 17. The latter is adapted to control the operation of all of the main functional members of the machine.

The general operation of the dishwashing machine is commonly known in the art, so that it does not require any further description here. Illustrated in the following description are only the most significant operation phases of the machine in so far as they are relevant in connection with the present invention.

In a per sè known manner, the dishwashing machine is adapted to carry out operation cycles comprising, in a sequence, a pre-wash phase (with either cold or hot water mixed with detergent, said phase being anyway excludable from the cycle), a wash phase with hot water mixed with detergent, at least an intermediate rinse phase with cold water, and a final rinse phase with hot water mixed with some rinse aid or similar product, followed by a washload drying phase.

When the washload items must be sprayed with water, the pump 4 is energized by the programme sequence control unit 17 to operate at the normal operating speed thereof, so as to cause the water to circulate both through the container 8 (where the water can be heated up by the heating element 7) and through the rotating spray arms 3 arranged thereabove.

At the end of each phase of the operation cycle of the machine, the water contained in the sump 2 is sent to the drain 13 by the pump 11 through the reservoir 12, where a part of the same water is retained for temporary storage. At the end of the final rinse, in particular, the rinse-aid containing hot water being sent towards the drain 13, collects at least partially in said reservoir 12, from where it flows back by gravity, through the pump 11, into the sump 2, where it can be used again for carrying out a wash phase (or a pre-wash phase with warm water) in a subsequent operation cycle of the machine.

It should be noticed that the simple rinse-aid containing water recovery arrangement described above has been illustrated in a merely orientative manner in its basic principles. In practice, it can be made and implemented in any different way, preferably as described in the afore cited EP-A-0 669 097 and EP-A-0 800 785.

Anyway, when said subsequent operation cycle of the machine is started, the recovered water in the washing vessel is likely to have cooled down.

According to the present invention, in the wash (or pre-wash) phase in which the water recovered from the final rinse phase of a previous operation cycle is reused, the programme sequence control unit 17 enables the circulating pump 4 to only operate at its normal operating speed after the heating element 7 has been allowed to operate so as to heat up the same water to a temperature T1 (for instance 60°C) which is above a pre-determined value T. Said value T is the temperature (approx. 40°C) below which the rinse aid contained in the water tends to give rise strong foaming if the water undergoes turbulences such as the ones that take place when it is sprayed onto the washload items through the spray arms 3.

In a preferable manner, therefore, the above cited wash (or pre-wash) phase starts with a water heat-up period in which the temperature of the same water is allowed to rise up to a temperature T1 (duly detected by the sensor means 18), and it is only upon conclusion of such a period that it is sprayed onto the washload items, through the spray arms 3, by letting the circulating pump 4 operate at the normal operating speed thereof.

In a preferred manner, furthermore, such an initial water heat-up period takes place by also letting the circulating pump 4 operate at the reduced speed thereof, which is so calculated and selected as to enable the water to only circulate inside the container 8 (thereby favouring the heat-exchange process between the same water and the heating element 7), while however avoiding to deliver the same water to the spray arms 3. Under such conditions, in fact, the water at the delivery side 5 of the pump 4 has no sufficient force to effectively reach also the spray arms 3 which are situated at a higher level with respect to the container 8.

As a result, the remarkable heat-exchange effect between the water, which circulates with a reduced force and without any substantial turbulence in the container 8, and the heating element 7 teams up with the reduced amount of the same water (as allowed for by the optimally sized designs of modern dishwashing machines) to enable the water to be heated up very rapidly and without giving rise to practically any foaming.

The initial water heat-up period is therefore reduced in an advantageous manner. Furthermore, when the heated-up water is eventually sprayed onto the washload items (as duly mixed with detergent product, in a per sè known manner) it develops an immediate cleansing action on the washload items themselves. As a result, for a same level of overall washing results the wash (or pre-wash) phase according to the present invention has a duration which is substantially equal to that of a traditional wash phase, in which the water is usually sprayed onto the washload items even before it has a pre-determined temperature.

IN any case, according to the invention the rinse-aid containing water is advantageously sprayed onto the washload items only upon reaching first a temperature T1, at which the rinse aid itself does not give rise to any substantial foaming.

According to the invention, it is therefore possible for the substantially clean water of a final rinse phase carried out under the addition of a rinse-aid product to be effectively recovered for reutilization in a wash (or pre-wash) phase of a subsequent operation cycle without affecting the general operation of the machine, in particular without affecting the optimum operation of the circulation pump 4, in any way.

## Claims

1. Method for recovering the water of a rinse phase carried out under addition of a rinse-aid product in an automatic dishwashing machine adapted to reuse such a water for carrying out a pre-wash or wash phase in a subsequent operation cycle thereof by having the same water sprayed onto the washload items arranged in a vessel by means of a pump adapted to supply spray means, a programme sequence control unit being adapted to control said pump and water heating means, **characterized in that** in said pre-wash or wash phase the rinse-aid containing water prior to being sprayed onto the washload items is heated up by said water heating means (7) at a temperature (T1) that is above a pre-determined value (T) said temperature (T) corresponding to the temperature below which the rinse aid contained in the water gives rise to substantial foaming when the pump (4) supplies said spray means (3) and above which the rinse aid contained in the water does/not give rise to substantial foaming when the pump supplied said spray means thereby preventing substantial generation of foam in said sprayed water.

2. Method according to claim 1, **characterized in that** the water is heated up to in said temperature (T1) during an initial period of said pre-wash or wash phase in which the pump (4) is operated at a reduced speed whereby the water containing the rinse agent is only directed towards said heating means (7) so as to favour the heat-exchange process said spray means being not supplied with the water containing said rinse aid during said initial period.

## Patentansprüche

1. Verfahren zur Rückgewinnung des Wassers aus der Abspülphase, die unter Zusatz eines Abspülhilfserzeugnisses in einer automatischen Geschirrspülmaschine ausgeführt wird, die ausgelegt ist, um solches Wasser zum Durchführen einer Vorwaschoder Waschphase in einem nachfolgenden Operationszyklus dadurch wiederzuverwenden, dass dasselbe Wasser auf die Teile der Waschladung, die in einem Gefäß angeordnet sind, mittels einer Pumpe gesprüht wird, die zum Versorgen von Sprühmitteln ausgelegt ist, wobei eine Programmabfolgesteuereinheit ausgelegt ist, um die Pumpe und ein Wasserheizmittel zu steuern,
**dadurch gekennzeichnet, dass** in der Vorwasch- oder Waschphase das das Abspülhilfsmittel enthaltende Wasser, bevor es auf die Teile der Waschladung gesprüht wird, durch das Wasserheizmittel (7) auf eine Temperatur (T1) aufgeheizt wird, die über einem vorbestimmten Wert (T) liegt, wobei die Temperatur (T) der Temperatur entspricht, unterhalb welcher das im Wasser enthaltene Abspülhilfsmittel ein deutliches Schäumen verursacht, wenn die Pumpe (4) die Sprühmittel (3) versorgt, und oberhalb welcher das im Wasser enthaltene Abspülhilfsmittel kein deutliches Schäumen verursacht, wenn die Pumpe die Sprühmittel versorgt, so dass dadurch eine deutliche Schaumerzeugung in dem gesprühten Wasser verhindert wird.

2. Verfahren nach Anspruch 1, **dadurch gekennzeichnet, dass** das Wasser auf die Temperatur (T1) während einer Anfangsperiode der Vorwasch- oder Waschphase aufgeheizt wird, bei der die Pumpe (4) mit reduzierter Geschwindigkeit betrieben wird, wodurch das das Abspülmittel enthaltende Wasser nur in Richtung auf das Heizmittel (7) geleitet wird, um einen Wärmeaustauschprozess zu begünstigen, wobei das Sprühmittel in der Anfangsperiode nicht mit dem das Abspülhilfsmittel enthaltenden Wasser versorgt wird.

## Revendications

1. Méthode de récupération de l'eau d'une phase de rinçage effectuée avec ajout d'un produit de rinçage dans un lave-vaisselle automatique adapté pour réutiliser cette eau afin d'effectuer une phase de prélavage ou de lavage lors d'un cycle de fonctionnement ultérieur en pulvérisant cette même eau sur la charge de lavage placée dans une cuve au moyen d'une pompe adaptée pour alimenter des moyens de pulvérisation, une unité de commande de séquence de programme étant adaptée pour contrôler ladite pompe et des moyens de chauffage de l'eau, **caractérisée en ce qu'**au cours de ladite phase de prélavage ou de lavage, l'eau contenant le produit de rinçage, avant d'être pulvérisée sur la charge de lavage, est chauffée par lesdits moyens de chauffage **(7)** de l'eau à une température **(T1)** qui est supérieure à une valeur prédéterminée **(T)**, ladite température **(T)** correspondant à la température au-dessous de laquelle le produit de rinçage contenu dans l'eau produit un moussage important quand la pompe **(4)** alimente lesdits moyens de pulvérisation **(3)** et au-dessus de laquelle le produit de rinçage contenu dans l'eau ne produit pas de moussage important quand la pompe alimente lesdits moyens de pulvérisation, empêchant ainsi une production importante de mousse dans ladite eau pulvérisée.

2. Méthode selon la revendication 1, **caractérisée en ce que** l'eau est chauffée à ladite température **(T1)** durant une période initiale de ladite phase de prélavage ou de lavage pendant laquelle la pompe **(4)** fonctionne à une vitesse réduite, de sorte que l'eau contenant le produit de rinçage est envoyée seulement en direction desdits moyens de chauffage **(7)** de manière à favoriser le processus d'échange thermique, lesdits moyens de pulvérisation n'étant pas alimentés avec l'eau contenant ledit produit de rinçage pendant ladite période initiale.
